Europäisches Patentamt

European Patent Office

Office européen des brevets

(11) Veröffentlichungsnummer: **0 540 939 B1**

(12) **EUROPÄISCHE PATENTSCHRIFT**

(45) Veröffentlichungstag der Patentschrift: **15.03.95**

(21) Anmeldenummer: **92117979.2**

(22) Anmeldetag: **21.10.92**

(51) Int. Cl.⁶: **C08F 257/02**, C08F 285/00, C08L 27/06, C07C 409/38, //(C08F257/02,212:08), (C08F285/00,220:12)

(54) **Emulsionscopolymerisate mit niedrigem Restmonomerengehalt.**

(30) Priorität: **07.11.91 DE 4136657**

(43) Veröffentlichungstag der Anmeldung:
**12.05.93 Patentblatt 93/19**

(45) Bekanntmachung des Hinweises auf die
Patenterteilung:
**15.03.95 Patentblatt 95/11**

(84) Benannte Vertragsstaaten:
**BE DE ES FR GB IT NL**

(56) Entgegenhaltungen:
**EP-A- 0 051 336**
**DE-A- 2 819 380**
**US-A- 4 169 195**

(73) Patentinhaber: **BASF Aktiengesellschaft**
**Carl-Bosch-Strasse 38**
**D-67063 Ludwigshafen (DE)**

(72) Erfinder: **Goertz, Hans-Helmut, Dr.**
**Am Wurmberg 11**
**W-6713 Freinsheim (DE)**
Erfinder: **Oschmann, Werner, Dr.**
**Bürgermeister-Horlacher-Strasse 44**
**W-6700 Ludwigshafen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft Copolymerisate, erhältlich durch

A) Emulsionspolymerisation von 75 bis 98 Gew.-% eines Monomerengemisches aus

$a_1$) 65 bis 85 Gew.-% $\alpha$-Methylstyrol,

$a_2$) 15 bis 35 Gew.-% mindestens einer Verbindung, ausgewählt aus der Gruppe bestehend aus Acrylnitril und Methacrylnitril,

$a_3$) 0 bis 10 Gew.-% mindestens eines weiteren Monomeren,

B) anschließende Emulsionspolymerisation in Gegenwart des nach Stufe A) erhaltenen Emulsionspolymerisates von 2 bis 25 Gew.-% eines Monomerengemisches aus

$b_1$) 60 bis 90 Gew.-% Styrol,

$b_2$) 10 bis 40 Gew.-% mindestens einer Verbindung, ausgewählt aus der Gruppe bestehend aus Acrylnitril und Methacrylnitril,

$b_3$) 0 bis 10 Gew.-% mindestens eines weiteren Monomeren

und

c) anschließende Emulsionspolymerisation in Gegenwart des nach Stufe B) erhaltenen Emulsionspolymerisates von 0 bis 10 Gew.-% eines Monomerengemisches aus

$c_1$) 85 bis 100 Gew.-% mindestens eines $C_1$-$C_4$-Alkylmethacrylates,

$c_2$) 0 bis 15 Gew.-% mindestens eines weiteren Monomeren,

wobei sich die Gewichtsprozente der in den Stufen A) bis C) eingesetzten Monomerengemische auf das Gesamtgewicht des Copolymerisats beziehen und sich auf 100 Gew.-% addieren.

Weiterhin betrifft die Erfindung ein Verfahren zur Herstellung dieser Copolymerisate sowie thermoplastische Formmassen, die diese Copolymerisate enthalten.

Copolymere aus $\alpha$-Methylstyrol und Acrylnitril, in denen der $\alpha$-Methylstyrol-Anteil größer als der Acrylnitril-Anteil ist, zeichnen sich durch hohe Glas- und Erweichungstemperaturen aus. Sie eignen sich daher als Modifier zur Herstellung von Formmassen mit sehr guter Wärmeformbeständigkeit.

Aus der DE-A 38 07 233 sind $\alpha$-Methylstyrol/Acrylnitril-Copolymerisate bekannt, die durch Emulsionspolymerisation hergestellt wurden. Die Aufgabe bestand darin, den Umsatz der Polymerisation auf Werte über 97% zu steigern, um hohe Mengen an Restmonomeren zu vermeiden. In der DE-A 28 19 380 wird ebenfalls ein Verfahren zur Herstellung von Acrylnitril-Copolymerisaten beschrieben, wobei die Aufgabe darin bestand, den Restgehalt an Acrylnitril kleiner als 500 ppm zu halten. Nachteilig bei beiden Verfahren sind die zu hohen $\alpha$-Methylstyrol-Restgehalte, was beispielsweise die Wärmeformbeständigkeit von Mischungen herabsetzt. Eine Entfernung von $\alpha$-Methylstyrol, z.B. auf physikalischem Wege, ist aufgrund der geringen Flüchtigkeit von $\alpha$-Methylstyrol nur schwierig zu erreichen.

Aufgabe der vorliegenden Erfindung war daher die Bereitstellung von $\alpha$-Methylstyrol/Acrylnitril-Copolymerisaten mit einem niedrigen Restmonomerengehalt an $\alpha$-Methylstyrol.

Demgemäß wurden die eingangs definierten Copolymerisate gefunden.

Des weiteren wurden ein Verfahren zur Herstellung dieser Copolymerisate, diese enthaltende thermoplastische Formmassen sowie aus diesen thermoplastischen Formmassen hergestellte Formkörper gefunden.

Die erfindungsgemäßen Copolymerisate sind erhältlich durch Emulsionspolymerisation in mehreren Stufen.

In der Stufe A) wird bevorzugt ein Monomerengemisch aus

$a_1$) 68 bis 75 Gew.-% $\alpha$-Methylstyrol und

$a_2$) 25 bis 32 Gew.-% mindestens einer Verbindung ausgewählt aus der Gruppe bestehend aus Acrylnitril und Methacrylnitril eingesetzt.

Der Gewichtsanteil des Monomerengemischs in der Stufe A) am gesamten Copolymerisat beträgt bevorzugt 80 bis 95 Gew.-%.

In der Stufe B) wird bevorzugt ein Monomerengemisch aus

$b_1$) 70 bis 85 Gew.-% Styrol und

$b_2$) 15 bis 30 Gew.-% mindestens einer Verbindung, ausgewählt aus der Gruppe bestehend aus Acrylnitril und Methacrylnitril, eingesetzt.

Durch die Polymerisation der Monomeren der Stufe B) in Gegenwart des in Stufe A) gebildeten Polymeren kann man den $\alpha$-Methylstyrol-Gehalt der Dispersion auf unter 1000 ppm, vorzugsweise unter 100 ppm senken.

Der Gewichtsanteil des Monomerengemischs in der Stufe B) am gesamten Copolymerisat beträgt bevorzugt 5 bis 20 Gew.-%.

Ist nach der Stufe B) der Acryl- oder Methacrylnitrilgehalt zu hoch, kann man zweckmäßig auf das erhaltene Polymerisat noch eine Stufe C) polymerisieren, wobei man bevorzugt ein Monomerengemisch aus

$c_1$) 90 bis 100 Gew.-% mindestens eines $C_1$-$C_4$-Alkylmethacrylates und

$c_2$) 0 bis 10 Gew.-% mindestens eines weiteren Monomeren einsetzt.

Der Gewichtsanteil des Monomerengemischs in der Stufe C) am gesamten Copolymerisat beträgt bevorzugt 0 bis 7 Gew.-%.

Als weitere Monomere in den Stufen A) - C) seien beispielhaft aufgeführt $C_1$-$C_{18}$-Alkylacrylate, bevorzugt die $C_1$-$C_{12}$-Alkylacrylate, besonders bevorzugt die $C_1$-$C_4$-Alkylacrylate wie Methylacrylat, Ethylacrylat, Propylacrylat, n-Butylacrylat, tert.Butylacrylat und Styrol.

Speziell in den Stufen A) und B) kommen zusätzlich noch $C_1$-$C_4$-Alkylmethacrylate in Betracht.

Als $C_1$-$C_4$-Alkylmethacrylate kommen bevorzugt Methylmethacrylat, Ethylmethacrylat, Propylmethacrylat, n-Butylmethacrylat, tert.Butylmethacrylat, insbesondere Methylmethacrylat, in Betracht.

Bei der Mitverwendung von Comonomeren in den Stufen A) und B) werden bevorzugt solche eingesetzt, deren Glasübergangstemperatur nicht signifikant niedriger ist als die der Monomeren $a_1$), $a_2$), $b_1$) und $b_2$). Es ist jedoch allgemein bevorzugt, in Stufen A) und B) keine weiteren Monomeren $a_3$) bzw. $b_3$) einzusetzen.

Die erfindungsgemäßen Copolymerisate stellt man durch Emulsionspolymerisation her.

Als Emulgatoren kann man beispielsweise Natrium-, Kalium- oder Ammoniumsalze von gesättigten oder ungesättigten $C_8$-$C_{20}$-Fettsäuren wie Laurinsäure, Palmitinsäure, Stearinsäure, Ölsäure, $C_8$-$C_{20}$-Alkylsulfonsäuren, insbesondere Octylsulfonsäure, Dodecylsulfonsäure, Tridecylsulfonsäure, Tetradecylsulfonsäure, Pentadecylsulfonsäure, Hexadecylsulfonsäure und Eicosylsulfonsäure, Schwefelsäure-$C_8$-$C_{20}$-alkylestern, insbesondere Schwefelsäureoctylester, Schwefelsäuredecylester, Schwefelsäuredodecylester, Schwefelsäureoctadecylester, Alkylbenzolsulfonsäuren, insbesondere Methylbenzolsulfonsäure, Ethylbenzolsulfonsäure, Butylbenzolsulfonsäure, Abietinsäure und deren Derivaten, Sulfobernsteinsäure-$C_1$-$C_8$-alkylestern, insbesondere Sulfobernsteinsäure- bis-(2-ethylhexylester), Sulfobernsteinsäuredioctylester, $C_1$-$C_{18}$-alkylierte Diphenylethersulfonsäuren, insbesondere das Natriumsalz der dodecylierten Diphenylether-disulfonsäure einsetzen.

Bezogen auf das Gesamtgewicht des Emulsionscopolymerisates wählt man die Emulgatormenge vorzugsweise im Bereich von 1,0 bis 2,5, vorzugsweise von 1,2 bis 2 Gew.-%.

Durch die Wahl von Art und Menge des Emulgators kann man in an sich bekannter Weise die Teilchengröße ($d_{50}$-Wert) der Emulsion einstellen. Man wählt den Bereich in der Regel zwischen 50 und 300 nm, bevorzugt zwischen 70 und 200 nm, besonders bevorzugt zwischen 70 und 150 nm. Durch diese Wahl der Teilchengröße erzielt man nach den bisherigen Beobachtungen sowohl gute optische (Transparenz, Opaleszenz) als auch gute mechanische Eigenschaften (Schlagzähigkeit).

Als Initiatoren setzt man im allgemeinen wasserlösliche thermisch zerfallende Initiatoren oder Redoxsysteme ein. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo- bis-(4,4'-cyanopentansäure).Als Redoxsysteme kann man beispielsweise Cumolhydroperoxid, Diisopropylbenzolhydroperoxid, tert.-Butylperacetat, tert.-Butylhydroperoxid in Kombination mit Reduktionsmitteln wie Natriumformaldehydsulfoxylat oder Ascorbinsäure in Gegenwart von Eisensalzen verwenden. Auch die genannten Persulfate kann man in Kombination mit Reduktionsmitteln wie Natrium- oder Kaliummetabisulfit in Redoxsystemen einsetzen.

Die Initiatormenge wählt man vorzugsweise im Bereich von 0,1 bis 0,4 Gew.-%, bezogen auf das Gesamtgewicht der eingesetzten Monomeren.

Als Übertragungsregler verwendet man in der Regel organische Schwefelverbindungen wie $C_1$-$C_{15}$-Alkylmercaptane, bevorzugt n-, i- und tert.-Dodecylmercaptan.

Die Menge des Übertragungsreglers wählt man im allgemeinen im Bereich von 0,02 bis 1 Gew.-%, vorzugsweise von 0,05 bis 0,5 Gew.-% bezogen auf das Gesamtgewicht der eingesetzten Monomeren.

Je nach eingesetztem Emulgator- und Initiatorsystem kann es zweckmäßig sein, den pH-Wert zu stabilisieren. Hierfür kommen Puffer wie Natrium-, Kalium(hydrogen)phosphat, Natrium-, Kaliumdiphosphat, Natrium-, Kaliumhydrogencarbonat, Natrium- und Kaliumcarbonat in Betracht.

Die Polymerisationstemperatur wählt man in der Regel zwischen 50 und 120 °C, bevorzugt zwischen 60 und 95 °C.

Im übrigen wird das erfindungsgemäße Copolymerisat so hergestellt, daß man eine wäßrige Mischung, bestehend aus einem Teil der Monomeren, Emulgator, Initiator, Regler und Puffersystem in einem mit Stickstoff inertisierten Reaktor vorlegt, in der Kälte inertisiert und dann für etwa 15 bis 120 Minuten auf die Polymerisationstemperatur bringt. Nach einer kurzen Polymerisationsphase zwischen etwa 10 bis 60 Minuten dosiert man den Rest der Monomeren der ersten Stufe zu, wobei man gleichzeitig weitere Mengen an Initiator zugibt. Auf diese Weise wird zunächst durch Emulgierung und Polymerisation die erste Stufe gebildet. Die weiteren Stufen werden jeweils unter Zulauf der Monomeren in Gegenwart der bereits gebildeten Stufe durch Emulsionspolymerisation erzeugt, wobei es zweckmäßig sein kann, die Monomeren zuvor unter Rühren im wäßrigen Medium zu emulgieren.

Der Feststoffgehalt der so erhältlichen Emulsionen beträgt im allgemeinen 30 bis 60, vorzugsweise 30 bis 50 Gew.-%.

Die Isolierung des Copolymerisats aus dem erhaltenen Latex kann man auf bekannte Weise durch Ausfällung, Filtration und anschließende Trocknung oder in einem Schritt durch Sprühtrocknung durchführen. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure verwendet werden.

Die Trocknung kann beispielsweise durch Gefrier-, Sprüh-, Wirbelschicht- und Umlufttrocknung erfolgen.

Das getrocknete Polymerisat kann man dann mit einem Thermoplasten und, falls gewünscht, weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Schlagzähigkeit nach bekannten Verfahren in Extrudern, Knetern oder Walzen mischen. Es ist auch möglich, die Dispersion mit einer PVC-Suspension nach an sich bekannter Weise zu mischen und in üblicher Weise aufzuarbeiten.

Die thermoplastischen Formmassen enthalten in der Regel 5 bis 95 Gew.-%, bevorzugt 25 bis 90 Gew.-% der erfindungsgemäßen Pfropfcopolymerisate.

Die Copolymerisate eignen sich im allgemeinen insbesondere als Modifizierungsmittel für Formmassen auf Basis von Polyvinylhalogeniden.

Bevorzugt sind daher thermoplastische Formmassen, enthaltend

5 bis 95 Gew.-%, vorzugsweise 50 bis 90 Gew.-% eines Polyvinylhalogenids und

5 bis 95 Gew.-%, vorzugsweise 10 bis 50 Gew.-% des Copolymerisats.

Geeignete Polyvinylhalogenide sind in der Regel vor allem Homo- und Copolymere des Vinylchlorids mit mindestens 80 Gew.-% Vinylchlorid-Einheiten oder nachchloriertes Polyvinylchlorid.

Besonders bevorzugt sind Homopolymere des Vinylchlorids.

Die Verarbeitung der Formmassen zu Formkörpern erfolgt durch für Thermoplaste übliche Methoden (z.B. Extrudieren, Spritzgießen, Kalandrieren, Pressen, Tiefziehen), so daß sich nähere Ausführungen hierzu erübrigen.

Die erfindungsgemäßen Copolymerisate eignen sich besonders als Modifier zur Herstellung wärmeformbeständiger Polyvinylchloridformmassen. Sie zeichnen sich gegenüber bekannten $\alpha$-Methylstyrol/Acrylnitril-Copolymerisaten durch einen Restmonomerengehalt an $\alpha$-Methylstyrol von unter 100 ppm und eine höhere Wärmeformbeständigkeit aus.

Beispiele

Beispiel 1

Stufe A):
In einem mit Rührer, Temperierung und Dosiervorrichtungen ausgestatteten Reaktionsgefäß wurden zu einer Mischung aus 1235 g vollentsalztem Wasser, 1,12 g einer Mischung von Natriumalkylsulfonaten mit einer mittleren Kettenlänge des Alkylrestes ($C_{12}$-$C_{15}$) von etwa 14-C-Atomen ("Emulgator") und 1,90 g Natriumperoxodisulfat 158 g einer Emulsion bestehend aus 1333 g vollentsalztem Wasser, 17,2 g Emulgator (s.o.), 2,00 g Natriumdiphosphat, 3,8 g tert.-Dodecylmercaptan, 1278 g $\alpha$-Methylstyrol und 523 g Acrylnitril (Stufe A)) gegeben und bei Raumtemperatur mit Stickstoff inertisiert. Anschließend wurde die Reaktionsmischung auf 80 °C erhitzt. Nach 30 min wurde der Rest der die Monomeren der Stufe A) enthaltenen Emulsion innerhalb von 4 h zudosiert, wobei parallel dazu während 6 h eine Lösung aus 1,90 g Natriumpersulfat und 120 g vollentsalztem Wasser dem Reaktionsgemisch zugefügt wurden. Danach wurde die Temperatur des Reaktionsgemisches auf 90 °C erhöht und 1 h nachpolymerisiert.
Stufe B):
Zu der oben erhaltenen Reaktionsmischung wurden 71 g Styrol und 24 g Acrylnitril (Stufe B)) während 15 min zugegeben. Dann wurde die Temperatur der Reaktionsmischung auf 80 °C gesenkt.
Stufe C):
Anschließend wurde zur erhaltenen Reaktionsmischung eine Emulsion bestehend aus 140 g vollentsalztem Wasser, 0,84 g Emulgator (s.o.), 0,2 g Natriumdiphosphat und 100 g Methylmethacrylat während 10 min zudosiert. Parallel dazu wurde dem Reaaktionsgemisch während 4 h eine Lösung bestehend aus 0,20 g Natriumpersulfat und 40 g vollentsalztem Wasser hinzugefügt. Danach wurde noch 1 h bei 90°C nachpolymerisiert. Dann wurde die Reaktionsmischung mit 3,2 g Emulgator (s.o.), gelöst in 10 g vollentsalztem Wasser, versetzt und abgekühlt.

Beispiele 2 - 6

Die Beispiele 2 - 6 wurden analog zu Beispiel 1 hergestellt, mit dem Unterschied, daß die Monomerenzusammensetzungen der Stufen A) bis C) und die Zugabezeiten der Monomeren der Stufe B) variiert wurden (s. Tabelle 1).

Die nach diesen Beispielen erhaltenen Copolymerisate wurden in üblicher Art und Weise ausgefällt, isoliert, gewaschen und getrocknet.

Die Gehalte der Restmonomeren wurden nach jeder Polymerisationsstufe gaschromatographisch bestimmt.

Tabelle 1: Zusammensetzungen der Monomerenmischungen und Restmonomerengehalte der Beispiele 1 bis 6

| Bsp. | Stufe A) [g] | | Restmonome- rengehalt [ppm] | | Stufe B) [g] | | Restmonome- rengehalt [ppm] | | Stufe C) [g] | | Restmonome- rengehalt [ppm] | |
|---|---|---|---|---|---|---|---|---|---|---|---|---|
| | α-MS | AN | α-MS | AN | S | AN | α-MS | AN | MMA | MA | α-MS | AN |
| 1 | 1278 | 523 | 4623 | 2732 | 71 | 24 | 620 | 1351 | 100 | – | 123 | 210 |
| 2[1] | 1210 | 495 | 5118 | 2596 | 142 | 48 | 252 | 1139 | 100 | – | 46 | 146 |
| 3[2] | 1144 | 467 | 4528 | 2434 | 213 | 71 | 111 | 1016 | 100 | – | <1 | 116 |
| 4[3] | 1076 | 440 | 4878 | 2241 | 284 | 95 | 69 | 1017 | 100 | – | <1 | 118 |
| 5[2] | 1144 | 467 | 5376 | 2334 | 213 | 71 | 91 | 1252 | 90 | 10 | <1 | 137 |
| 6[2] | 1144 | 467 | 4659 | 2902 | 229 | 57 | 209 | 518 | 90 | 10 | <1 | 63 |
| Ver- gleich | 1345 | 550 | 10357 | 2042 | – | – | – | – | 210 | – | 1932 | 76 |

Verwendete Abkürzungen:

α-MS = α-Methylstyrol, AN = Acrylnitril, S = Styrol, MMA = Methylmethacrylat, MA = Methacrylat

[1] Zugabezeit der Monomerenmischung der Stufe B) : 30 min
[2] " " : 45 min
[3] " " : 60 min

Beim Vergleichsversuch wurde unter ansonsten unveränderten Bedingungen auf Stufe B) verzichtet.

EP 0 540 939 B1

Beispiel 7

Herstelllung einer thermoplastischen Formmasse

50 g PVC, K-Wert 61
50 g Copolymerisat aus Beispiel 1
1 g Di-n-octylzinn-bis-thioglykolsäure-isooctylester
1 g Glycerindioleat
0,2 g Ester der Montansäuren mit Ethylenglykol und 1,3-Butandiol
wurden auf einem Walzwerk bei 190°C 8 min gemischt. Das so erhaltene Gemisch wurde anschließend zu Scheiben gepreßt.
Preßbedingungen: bei 190°C, 200 bar
3 min vorheizen
2 min pressen
3 min abkühlen

Beispiele 8 - 13

Analog zu Beispiel 7 wurden die Copolymerisate aus den Beispielen 2 - 6 und das Copolymerisat des Vergleichsbeispiels zu thermoplastischen Formmassen verarbeitet.
Die Bestimmung der Wärmeformbeständigkeit erfolgte über die Vicat-Temperatur VST/B 150 nach DIN 53 460 an 4 mm dicken Scheiben.
Die Ergebnisse aus den Beispielen 7 - 13 finden sich in Tabelle 2.

Tabelle 2

| Wärmeformbeständigkeit der Copolymerisate und der thermoplastischen Formmassen aus den Beispielen 1 - 13 | | | | |
|---|---|---|---|---|
| Beispiel | Glasübergangstemperatur* [°C] | Vicat B [°C] | Beispiel | Vicat B [°C] |
| 1 | 128 | 118,2 | 7 | 93 |
| 2 | 128 | 117,9 | 8 | 93 |
| 3 | 127 | 117,7 | 9 | 93 |
| 4 | 126 | 117,4 | 10 | 92 |
| 5 | 126 | 117,6 | 11 | 93 |
| 6 | 127 | 118,4 | 12 | 93 |
| Vergleichsbeispiel | 124 | 114,7 | 13 | 92 |

*) Die Bestimmung der Glasübergangstemperatur erfolgte nach der DSC-Methode (ASTM D 3418-82).

**Patentansprüche**

1. Copolymerisate, erhältlich durch
   A) Emulsionspolymerisation von 75 bis 98 Gew.-% eines Monomerengemisches aus
      $a_1$) 65 bis 85 Gew.-% $\alpha$-Methylstyrol,
      $a_2$) 15 bis 35 Gew.-% mindestens einer Verbindung, ausgewählt aus der Gruppe bestehend aus Acrylnitril und Methacrylnitril,
      $a_3$) 0 bis 10 Gew.-% mindestens eines weiteren Monomeren,
   B) anschließende Emulsionspolymerisation in Gegenwart des nach Stufe A) erhaltenen Emulsionspolymerisates von 2 bis 25 Gew.-% eines Monomerengemisches aus
      $b_1$) 60 bis 90 Gew.-% Styrol,

$b_2$) 10 bis 40 Gew.-% mindestens einer Verbindung, ausgewählt aus der Gruppe bestehend aus Acrylnitril und Methacrylnitril,

$b_3$) 0 bis 10 Gew.-% mindestens eines weiteren Monomeren

und

C) anschließende Emulsionspolymerisation in Gegenwart des nach Stufe B) erhaltenen Emulsionspolymerisates von 0 bis 10 Gew.-% eines Monomerengemisches aus

$c_1$) 85 bis 100 Gew.-% mindestens eines $C_1$-$C_4$-Alkylmethacrylates,

$c_2$) 0 bis 15 Gew.-% mindestens eines weiteren Monomeren,

wobei sich die Gewichtsprozente der in den Stufen A) bis C) eingesetzten Monomerengemische auf das Gesamtgewicht des Copolymerisats beziehen und sich auf 100 Gew.-% addieren.

2. Verfahren zur Herstellung von Copolymerisaten, dadurch gekennzeichnet, daß man folgende Schritte ausführt:

A) Emulsionspolymerisation von 75 bis 98 Gew.-% eines Monomerengemisches aus

$a_1$) 65 bis 85 Gew.-% $\alpha$-Methylstyrol,

$a_2$) 15 bis 35 Gew.-% mindestens einer Verbindung, ausgewählt aus der Gruppe bestehend aus Acrylnitril und Methacrylnitril,

$a_3$) 0 bis 10 Gew.-% mindestens eines weiteren Monomeren,

B) anschließende Emulsionspolymerisation in Gegenwart des nach Stufe A) erhaltenen Emulsionspolymerisates von 2 bis 25 Gew.-% eines Monomerengemisches aus

$b_1$) 60 bis 90 Gew.-% Styrol,

$b_2$) 10 bis 40 Gew.-% mindestens einer Verbindung, ausgewählt aus der Gruppe bestehend aus Acrylnitril und Methacrylnitril,

$b_3$) 0 bis 10 Gew.-% mindestens eines weiteren Monomeren

und

C) anschließende Emulsionspolymerisation in Gegenwart des nach Stufe B) erhaltenen Emulsionspolymerisates von 0 bis 10 Gew.-% eines Monomerengemisches aus

$c_1$) 85 bis 100 Gew.-% mindestens eines $C_1$-$C_4$-Alkylmethacrylates,

$c_2$) 0 bis 15 Gew.-% mindestens eines weiteren Monomeren,

wobei sich die Gewichtsprozente der in den Stufen A) bis C) eingesetzten Monomerengemische auf das Gesamtgewicht des Copolymerisats beziehen und sich auf 100 Gew.-% addieren.

3. Thermoplastische Formmassen, enthaltend 5 bis 95 Gew.-% eines Copolymerisates gemäß Anspruch 1.

4. Thermoplastische Formmassen nach Anspruch 3, enthaltend 5 bis 95 Gew.-% Polyvinylhalogenid oder eines Vinylchloridcopolymeren mit mindestens 80 Gew.-% Vinylchlorideinheiten oder chloriertes Polyvinylchlorid und 5 bis 95 Gew.-% eines Copolymerisates gemäß Anspruch 1.

5. Verwendung der thermoplastischen Formmassen gemäß Anspruch 3 oder 4 zur Herstellung von Formkörpern.

6. Formkörper, hergestellt aus thermoplastischen Formmassen gemäß Anspruch 3 oder 4.

## Claims

1. A copolymer obtainable by

A) emulsion polymerisation of from 75 to 98% by weight of a monomer mixture of

$a_1$) from 65 to 85% by weight of $\alpha$-methylstyrene,

$a_2$) from 15 to 35% by weight of at least one compound selected from the group consisting of acrylonitrile and methacrylonitrile and

$a_3$) from 0 to 10% by weight of at least one further monomer,

B) subsequent emulsion polymerization, in the presence of the emulsion polymer obtained in stage A), of from 2 to 25% by weight of a monomer mixture of

$b_1$) from 60 to 90% by weight of styrene,

$b_2$) from 10 to 40% by weight of at least one compound selected from the group consisting of acrylonitrile and methacrylonitrile and

b₃) from 0 to 10% by weight of at least one further monomer

and

C) subsequent emulsion polymerization, in the presence of the emulsion polymer obtained in stage B), of from 0 to 10% by weight of a monomer mixture of

$c_1$) from 85 to 100% by weight of at least one $C_1$-$C_4$-alkyl methacrylate and

$c_2$) from 0 to 15% by weight of at least one further monomer,

the percentages by weight of the monomer mixtures used in stages A) to C) being based on the total weight of the copolymer amd summing to 100% by weight.

2. A process for the preparation of a copolymer, which comprises the following steps:

A) emulsion polymerization of from 75 to 98% by weight of a monomer mixture of

$a_1$) from 65 to 85% by weight of α-methylstyrene,

$a_2$) from 15 to 35% by weight of at least one compound selected from the group consisting of acrylonitrile and methacrylonitrile and

$a_3$) from 0 to 10% by weight of at least one further monomer,

B) subsequent emulsion polymerization, in the presence of the emulsion polymer obtained in stage A), of from 2 to 25% by weight of a monomer mixture of

$b_1$) from 60 to 90% by weight of styrene,

$b_2$) from 10 to 40% by weight of at least one compound selected from the group consisting of acrylonitrile and methacrylonitrile and

$b_3$) from 0 to 10% by weight of at least one further monomer

and

C) subsequent emulsion polymerization, in the presence of the emulsion polymer obtained in stage B), of from 0 to 10% by weight of a monomer mixture of

$c_1$) from 85 to 100% by weight of at least one $C_1$-$C_4$-alkyl methacrylate and

$c_2$) from 0 to 15% by weight of at least one further monomer,

the percentages by weight of the monomer mixtures used in stages A) to C) being based on the total weight of the copolymer amd summing to 100% by weight.

3. A thermoplastic molding material containing from 5 to 95% by weight of a copolymer as claimed in claim 1.

4. A thermoplastic molding material as claimed in claim 3, containing from 5 to 95% by weight of a polyvinyl halide or of a vinyl chloride copolymer with not less than 80% by weight of vinyl chloride units or chlorinated polyvinyl chloride and from 5 to 95% by weight of a copolymer as claimed in claim 1.

5. Use of a thermoplastic molding material as claimed in claim 3 or 4 for the production of moldings.

6. A molding produced from a thermoplastic molding material as claimed in claim 3 or 4.

**Revendications**

1. Copolymères, obtenus par

A) polymérisation en émulsion de 75 à 98% en poids d'un mélange de monomères composé de

$a_1$) 65 à 85% en poids d'α-méthylstyrène,

$a_2$) 15 à 35% en poids d'au moins un composé choisi dans le groupe de l'acrylonitrile et du méthacrylonitrile.

$a_3$) 0 à 10% en poids d'au moins un autre monomère,

B) polymérisation subséquente en émulsion, en présence du produit de polymérisation en émulsion obtenu dans l'étape A), de 2 à 25% en poids d'un mélange de monomères composé de

$b_1$) 60 à 90% en poids de styrène,

$b_2$) 10 à 40% en poids d'au moins un compose choisi dans le groupe de l'acrylonitrile et du méthacrylonitrile,

$b_3$) 0 à 10% en poids d'au moins un autre monomère

et

C) polymérisation subséquente en émulsion, en présence du produit de polymérisation en émulsion obtenu dans l'étape B), de 0 à 10% en poids d'un mélange de monomères composé de

$c_1$) 85 à 100% en poids d'au moins un méthacrylate d'alkyle en $C_1$-$C_4$,

$c_2$) 0 à 15% en poids d'au moins un autre monomère,

les pourcentages en poids des mélanges de monomères utilisés dans les étapes A) à C) se rapportant au poids total du copolymère et s'additionnant à 100% en poids.

2. Procédé de préparation de copolymères, caractérisé en ce que l'on conduit les étapes suivantes:

A) Polymérisation en émulsion de 75 à 98% en poids d'un mélange de monomères composé de

$a_1$) 65 à 85% en poids d'$\alpha$-méthylstyrène,

$a_2$) 15 à 35% en poids d'au moins un composé choisi dans le groupe de l'acrylonitrile et du méthacrylonitrile,

$a_3$) 0 à 10% en poids d'au moins un autre monomère,

B) Polymérisation subséquente en émulsion, en présence du produit de polymérisation en émulsion obtenu dans l'étape A), de 2 à 25% en poids d'un mélange de monomères composé de

$b_1$) 60 à 90% en poids de styrène,

$b_2$) 10 a 40% en poids d'au moins un composé choisi dans le groupe de l'acrylonitrile et du méthacrylonitrile,

$b_3$) 0 à 10% en poids d'au moins un autre monomère

et

C) Polymérisation subséquente en émulsion, en présence du produit de polymérisation en émulsion obtenu dans l'étape B), de 0 a 10% en poids d'un mélange de monomères compose de

$c_1$) 85 a 100% en poids d'au moins un méthacrylate d'alkyle en $C_1$-$C_4$,

$c_2$) 0 à 15% en poids d'au moins un autre monomère,

les pourcentages en poids des mélanges de monomères utilisés dans les étapes A) à C) se rapportant au poids total du copolymère et s'additionnant à 100% en poids.

3. Masses à mouler thermoplastiques, contenant 5 à 95% en poids d'un copolymère selon la revendication 1.

4. Masses à mouler thermoplastiques selon la revendication 3, contenant 5 à 95% en poids de polyhalogénure de vinyle ou d'un copolymère de chlorure de vinyle contenant au moins 80% en poids de motifs chlorure de vinyle ou de polychlorure de vinyle chloré, et 5 à 95% en poids d'un copolymère selon la revendication 1.

5. Utilisation des masses à mouler thermoplastiques selon la revendication 3 ou 4 pour la fabrication de corps moulés.

6. Corps moulés, fabriqués à partir de masses à mouler thermoplastiques selon la revendication 3 ou 4.